# EUROPEAN PATENT APPLICATION

(11) **EP 4 467 985 A1**
(43) Date of publication of application: **27.11.2024**
(21) Application number: 24176976.9
(22) Date of filing: 21.05.2024
(51) Int. Cl.: G01N 35/00, G01N 30/88

(54) **METHOD FOR ASSESSING DEGREE OF CONSUMPTION OF CONSUMABLE PART OF GAS CHROMATOGRAPH AND MASS ANALYZER**

(30) Priority: 24.05.2023 JP 2023085638
(71) Applicant: Shimadzu Corporation, Nakagyo-ku, Kyoto-shi, Kyoto 604-8511 (JP); Hyogo College of Medicine, Nishinomiya-shi Hyogo 663-8501 (JP)
(72) Inventor: YOKOYAMA, Tomonori, Kyoto-shi, Kyoto, 604-8511 (JP); OJIMA, Noriyuki, Kyoto-shi, Kyoto, 604-8511 (JP); NISHIUMI, Shin, Nishinomiya-shi, Hyogo, 663-8501 (JP)
(74) Representative: Müller-Boré & Partner Patentanwälte PartG mbB

(57) **Abstract**

Provided is a method for appropriately assessing the degree of consumption of a consumable part provided at a position where the part comes in contact with a sample in a gas chromatograph or mass analyzer. A sample for assessment containing an indicator substance is passed through a gas chromatograph including the consumable part concerned, and a mass spectrometric analysis of the sample for assessment exiting from the gas chromatograph is performed with a mass analyzer. Alternatively, a mass spectrometric analysis of a sample for assessment containing an indicator substance is performed by using a mass analyzer including the consumable part concerned. A signal intensity of the indicator substance is acquired from the result of the mass spectrometric analysis. The degree of consumption of the consumable part is assessed by comparing the acquired signal intensity with a preset reference signal intensity.

## Description

### TECHNICAL FIELD

The present invention relates to a method for assessing the degree of consumption of a consumable part used in a gas chromatograph and a mass analyzer.

### BACKGROUND ART

The components of a chromatograph, mass analyzer or other types of analyzers include so-called consumable parts which will need to be replaced due to degradation, contamination or other causes resulting from their use. Failing to appropriately replace consumable parts may unfavorably affect the accuracy of the measurement. Therefore, many analyzers or analyzer-controlling systems are equipped with the function of informing the user of the state of use of the consumable parts or an estimate of the timing for their replacement.

For example, Patent Literature 1 discloses an analyzer-controlling system configured to monitor the degree of use (period of use, number of times of use, and/or amount of use) of each consumable part and calculate a scheduled date for the replacement of the consumable part based on that degree of use as well as the upper limit of the degree of use previously set for each consumable part. In this system, the scheduled date for the replacement calculated for each consumable part is shown on a display unit. An alert message of "Replacement Required" is additionally shown for a consumable part which has elapsed the scheduled date for the replacement. By checking the displayed information and replacing the consumable part in question, the user can maintain the analyzer in proper condition.

### CITATION LIST

### PATENT LITERATURE

Patent Literature 1: JP 2014-032022 A

### SUMMARY OF INVENTION

### TECHNICAL PROBLEM

Some consumable parts are constantly exposed to a vaporized or ionized sample during a measurement. Examples of this type of consumable parts include a septum, insert and separation column provided in a sample vaporization chamber of a gas chromatograph, an ionization chamber of a mass analyzer, as well as a filament provided in an ion source of the ionization chamber. For those consumable parts, the extent of the progress of the degradation or contamination (which is hereinafter called the "degree of consumption") varies depending on not only the degree of use of the analyzer but also the properties of the sample subjected to the measurement. The method according to Patent Literature 1 does not take into account this factor and cannot satisfactorily assess the actual degree of consumption of the consumable parts.

The problem to be solved by the present invention is to appropriately assess the degree of consumption of a consumable part provided at a position where the part comes in contact with a sample in a gas chromatograph or mass analyzer.

### SOLUTION TO PROBLEM

A method for assessing the degree of consumption of a consumable part of a gas chromatograph according to the present invention developed for solving the previously described problem includes:
an analyzing process in which a sample for assessment containing an indicator substance is passed through a gas chromatograph including a consumable part which comes in contact with a sample, and a mass spectrometric analysis of the sample for assessment exiting from the gas chromatograph is performed with a mass analyzer;
a signal-intensity acquisition process in which a signal intensity of the indicator substance is acquired from a result of the mass spectrometric analysis in the analyzing process; and
an assessment process in which the degree of consumption of the consumable part is assessed by comparing the signal intensity acquired in the signal-intensity acquisition process with a preset reference signal intensity.

A method for assessing the degree of consumption of a consumable part of a mass analyzer according to the present invention developed for solving the previously described problem includes:
an analyzing process in which a mass spectrometric analysis of a sample for assessment containing an indicator substance is performed by using a mass analyzer including a consumable part which comes in contact with a sample;
a signal-intensity acquisition process in which a signal intensity of the indicator substance is acquired from a result of the mass spectrometric analysis in the analyzing process; and
an assessment process in which the degree of consumption of the consumable part is assessed by comparing the signal intensity acquired in the signal-intensity acquisition process with a preset reference signal intensity.

### ADVANTAGEOUS EFFECTS OF INVENTION

According to the present invention, it is possible to appropriately assess the degree of consumption of a consumable part provided at a position where the part comes in contact with a sample in a gas chromatograph or mass analyzer.

### BRIEF DESCRIPTION OF DRAWINGS

Fig. 1 is a schematic configuration diagram of a gas chromatograph mass spectrometer in which an assessment is performed in one embodiment of the method for assessing the degree of consumption of a consumable part according to the present invention.
Fig. 2 is a flowchart showing the assessment procedure in the aforementioned embodiment.
Fig. 3 is a chart showing the result of a primary analysis in a cluster analysis performed for selecting indicator substances for assessing the degree of consumption of a glass insert.
Fig. 4A is a chart showing the result of a secondary analysis of Cluster G1 in Fig. 3.
Fig. 4B is a chart showing the result of a secondary analysis of Clusters G2 and G3 in Fig. 3.
Fig. 5 is a chart showing the result of a primary analysis in a cluster analysis performed for selecting indicator substances for assessing the degree of consumption of a column.
Fig. 6 is a chart showing the result of a secondary analysis of Cluster C5 in Fig. 5.
Fig. 7 is a chart showing the result of a primary analysis in a cluster analysis performed for selecting indicator substances for assessing the degree of consumption of an ionization chamber.
Fig. 8A is a chart showing the result of a secondary analysis of Cluster M1 in Fig. 7.
Fig. 8B is a chart showing the result of a secondary analysis of Cluster M3 in Fig. 7.
Fig. 9 is a chart showing the result of a tertiary analysis of Cluster M11 in Fig. 8A.

### DESCRIPTION OF EMBODIMENTS

One embodiment of the method for assessing the degree of consumption of a consumable part according to the present invention is hereinafter described with reference to the drawings. In the present embodiment, a method for assessing the degree of consumption of a consumable part of a gas chromatograph mass spectrometer (GC-MS) is described. It should be noted that the "gas chromatograph" and the "mass analyzer" in the present invention include a gas chromatograph and a mass analyzer provided as partial components of a gas chromatograph mass spectrometer, respectively.

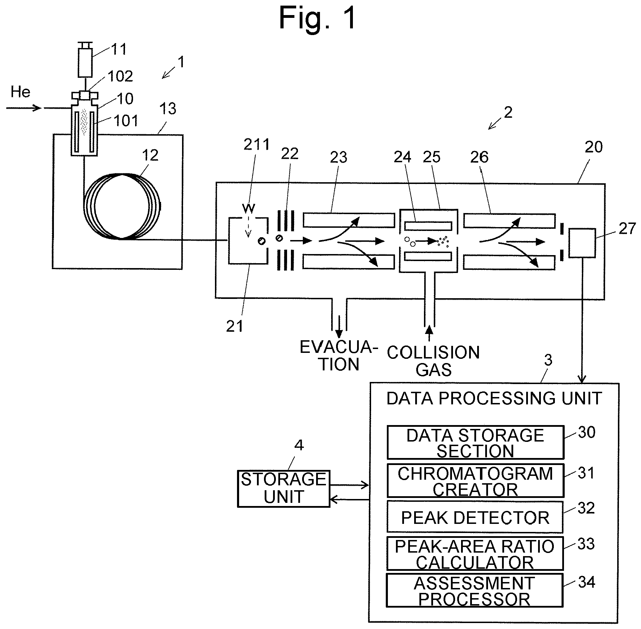

Fig. 1 is a schematic configuration diagram of a GC-MS in which an assessment of the degree of consumption of a consumable part is performed in the present embodiment. This GC-MS includes a gas chromatograph 1, mass analyzer 2, data processing unit 3 and storage unit 4.

The gas chromatograph 1 includes a sample vaporization chamber 10 configured to vaporize a trace amount of liquid sample, a micro syringe 11 configured to inject a liquid sample into the sample vaporization chamber 10, a column 12 configured to separate sample components in the temporal direction, and a column oven 13 configured to regulate the temperature of the column 12. A glass insert 101 is contained in the sample vaporization chamber 10, with the top portion of this chamber sealed with a septum 102.

The mass analyzer 2 is a triple quadrupole mass analyzer, for example, and has the following components within an analysis chamber 20 evacuated by a vacuum pump (not shown): an ionization chamber 21 within which a compound as a target of the measurement is ionized; an ion lens 22 configured to transport ions while converging them; a front quadrupole mass filter 23 formed by four rod electrodes; a collision cell 25, within which a multipole ion guide 24 is located; a rear quadrupole mass filter 26; and a detector 27 configured to output, as a detection signal, an ion intensity signal corresponding to the amount of ions it has received. Within the collision cell 25, a collision gas, which is an inert gas, such as argon or nitrogen, is continuously or intermittently supplied. The ionization chamber 21 includes an ion source (not shown) configured to ionize a compound as a measurement target by electron ionization. The ion source includes a filament 211 for generating thermions.

In the gas chromatograph 1, a stream of carrier gas, such as helium, is supplied through the sample vaporization chamber 10 into the column 12 at a constant flow rate. When a trace amount of liquid sample is injected from the micro syringe 11 into the sample vaporization chamber 10, the liquid sample is instantaneously vaporized within the sample vaporization chamber 10 and carried into the column 12 by the stream of carrier gas. While passing through the column 12, whose temperature is regulated by the column oven 13, the various components contained in the sample are separated from each other and flow out from the exit end of the column 12 in a temporally separated form.

The sample gas flowing out from the column 12 is introduced into the ionization chamber 21 of the mass analyzer 2. The component molecules contained in the sample gas are sequentially ionized by colliding with the thermions generated from the filament 211. The ionized sample molecules are subjected to a mass spectrometric analysis in various monitoring modes and scan modes, such as a SIM (selected ion monitoring) measurement, product-ion scan measurement or MRM (multiple reaction monitoring) measurement.

For example, in the SIM measurement, no selection of ions is performed in the front quadrupole mass filter 23 (this filter is not operated as a mass filter), while the rear quadrupole mass filter 26 is operated with a fixed mass-to-charge ratio at which ions are allowed to pass through and be detected. On the other hand, in the product-ion scan measurement and MRM measurement, both of the front and rear quadrupole mass filters 23 and 26 are operated as mass filters. The front quadrupole mass filter 23 allows only an ion designated as a precursor ion to pass through. Meanwhile, a collision gas is supplied into the collision cell 25 to cause the precursor ion to be fragmented into product ions. In the case of the product-ion scan measurement, the mass-to-charge ratio at which ions are allowed to pass through the rear quadrupole mass filter 26 is varied to scan a specific range of mass-to-charge ratios. In the case of the MRM measurement, the mass-to-charge ratio at which ions are allowed to pass through the rear quadrupole mass filter 26 is fixed. Ions which have passed through the rear quadrupole mass filter 26 are detected by the detector 27.

The data processing unit 3 includes a data storage section 30, chromatogram creator 31, peak detector 32, peak-area ratio calculator 33, and assessment processor 34 as its functional blocks. Additionally, the data processing unit 3 is connected to the storage unit 4. Detailed descriptions of these components will be given later.

The data processing unit 3 and the storage unit 4 may actually be a personal computer, for example. In that case, the aforementioned functions can be realized by executing, on this computer, dedicated control-and-processing software previously installed on the same computer.

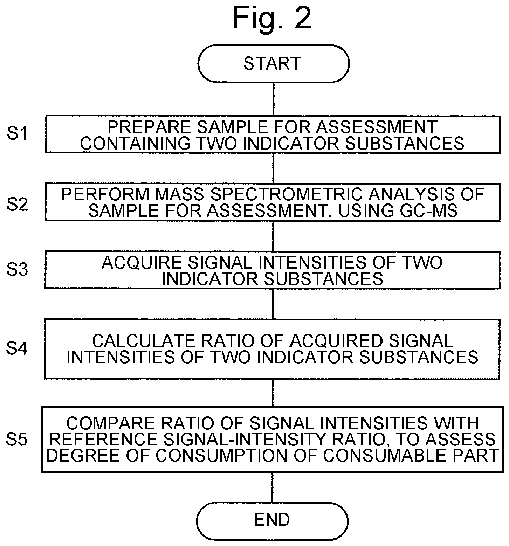

The glass insert 101, septum 102, and column 12 in the gas chromatograph 1, as well as the ionization chamber 21 and the filament 211 in the mass analyzer 2 are consumable parts which the sample comes in contact with during an analysis. Those parts are the targets of the assessment in the method for assessing the degree of consumption according to the present embodiment. Hereinafter, the assessment procedure in the method for assessing the degree of consumption according to the present embodiment is described with reference to the flowchart in Fig. 2. In the following description, it is assumed that two indicator substances are used for assessing the degree of consumption of a consumable part, although the number of kinds of the indicator substances to be used for assessing the degree of consumption may be one, three or more.

In Step S1, a sample for assessment containing two indicator substances corresponding to a consumable part is prepared. If there are two or more consumable parts to be assessed, a sample for assessment containing two indicator substances is prepared for each consumable part. Detailed descriptions of the indicator substances will be given later. In Step S2, a mass spectrometric analysis of the sample for assessment is performed by using a GC-MS including the consumable part to be assessed. In Step S3, a signal intensity is acquired for each of the two indicator substances from the result of the mass spectrometric analysis obtained in Step S2. In Step S4, the ratio of the acquired signal intensities of the two indicator substances is calculated. In Step S5, the degree of consumption of the consumable part to be assessed is evaluated by comparing the calculated signal-intensity ratio with a reference signal-intensity ratio which is previously set as a criterion for replacing the consumable part in question. The processes of Steps S3 through S5 should be performed for each consumable part if there are two or more consumable parts that need to be assessed.

In the previously described GC-MS, Steps S3, S4 and S5 are respectively performed by the peak detector 32, peak-area ratio calculator 33 and assessment processor 34 in the data processing unit 3. The information related to the indicator substances corresponding to each consumable part (the kinds of indicator substances, as well as the mass-to-charge ratio value and retention time of an ion originating from each indicator substance) and the reference signal-intensity ratio are previously stored in the storage unit 4.

Specifically, the data of the detection signals produced by the detector 27 in the mass analyzer 2 are temporarily stored in the data storage section 30 in the data processing unit 3. After the completion of the analysis, the chromatogram creator 31 reads the data of the sample for assessment from the data storage section 30. Based on the read data, the chromatogram creator 31 produces, for each of the two indicator substances, a mass chromatogram at a specific mass-to-charge ratio characteristic of the indicator substance. The peak detector 32 locates a peak at around a preset retention time in each of those mass chromatograms and calculates the peak areas of the detected peaks as the signal intensities of the two indicator substances. The peak-area ratio calculator 33 computes the ratio of the peak areas of the two indicator substances calculated by the peak detector 32. The assessment processor 34 reads the reference peak-area ratio (reference signal-intensity ratio) previously set for the two indicator substances from the storage unit 4 and compares this reference peak-area ratio with the peak-area ratio calculated by the peak-area ratio calculator 33.

As for the indicator substance, a substance can be used for which a test has already been performed as to whether or not the signal intensity significantly changes (increases or decreases) with the progress of the degradation or contamination of the consumable part. For example, indicator substances are selected from metabolites in blood plasma. Specifically, a measurement of a sample of blood plasma is performed with a GC-MS consisting of a gas chromatograph coupled with a triple quadrupole mass analyzer, in which an unused product of the consumable part is initially used. After that, the measurement of the blood-plasma sample is repeatedly performed to change the number of times of use of the consumable part in question. For this measurement, the consumable parts other than the part in question should be replaced with new ones for each execution of the measurement so that the conditions other than the number of times of use of the consumable part concerned will always be identical. From the measurement results thus obtained, the change in the value of the signal intensity (peak area) of each peak in the mass chromatogram originating from the metabolites in the blood-plasma sample is checked.

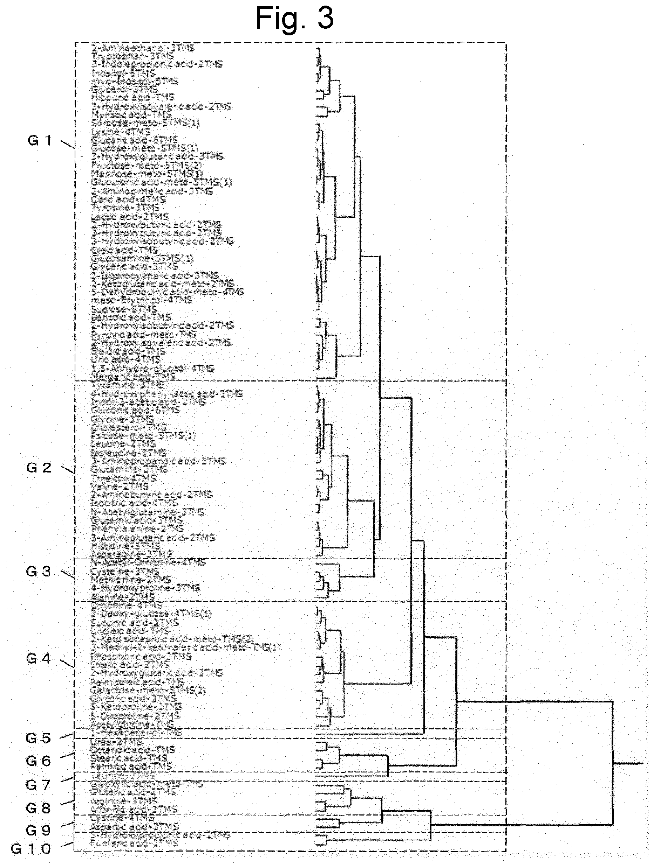

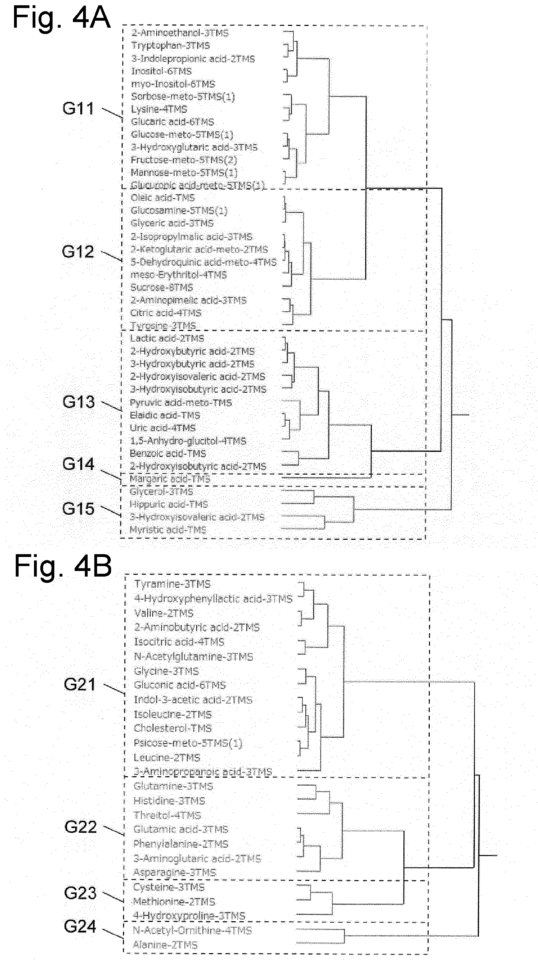

As an example, the previously described measurement was performed for the glass insert 101, with the number of times of use of this part gradually changed. The rate of change in signal intensity relative to the initial signal intensity was calculated for different values of the number of times of use. Based on the rate of change, the grouping of the compounds was performed by a cluster analysis. The results were as shown in Figs. 3, 4A and 4B. Fig. 3 shows the result of a primary analysis, where G1 through G10 represent primary clusters. Fig. 4A shows the result of a secondary analysis in Cluster G1 in Fig. 3, where G11 through G15 represent secondary clusters. Fig. 4B shows the result of a secondary analysis in Clusters G2 and G3 in Fig. 3, where G21 through G24 represent secondary clusters. Additionally, Table 1 shows an overview of the rate of change in signal intensity (peak area) with the changing number of times of use of the glass insert 101 in Clusters G13-G15, G6 and G22-G24. Each value of the rate of change in the table is a mean value obtained by totaling the rates of change in signal intensity of the components included in each cluster and dividing the total by the number of components. The same applies hereinafter.

**Table 1**

| | Cluster | Number of Components | Rate of Change | |
|---|---|---|---|---|
| | | | 160 times | 320 times |
| Rate of Change Increased | G13 | 11 | 1.24 | 1.36 |
| | G14 | 1 | 1.10 | 1.49 |
| | G15 | 4 | 1.09 | 1.19 |
| | G6 | 4 | 0.85 | 1.15 |
| Rate of Change Decreased | G22 | 7 | 1.43 | 1.25 |
| | G23 | 3 | 1.38 | 1.07 |
| | G24 | 2 | 1.24 | 0.97 |

The signal intensities of the compounds included in Clusters G13-G15 as well as Cluster G6 had the tendency to increase with the increasing number of times of use of the glass insert 101. On the other hand, the signal intensities in Clusters G22-G24 had the tendency to decrease with the increasing number of times of use.

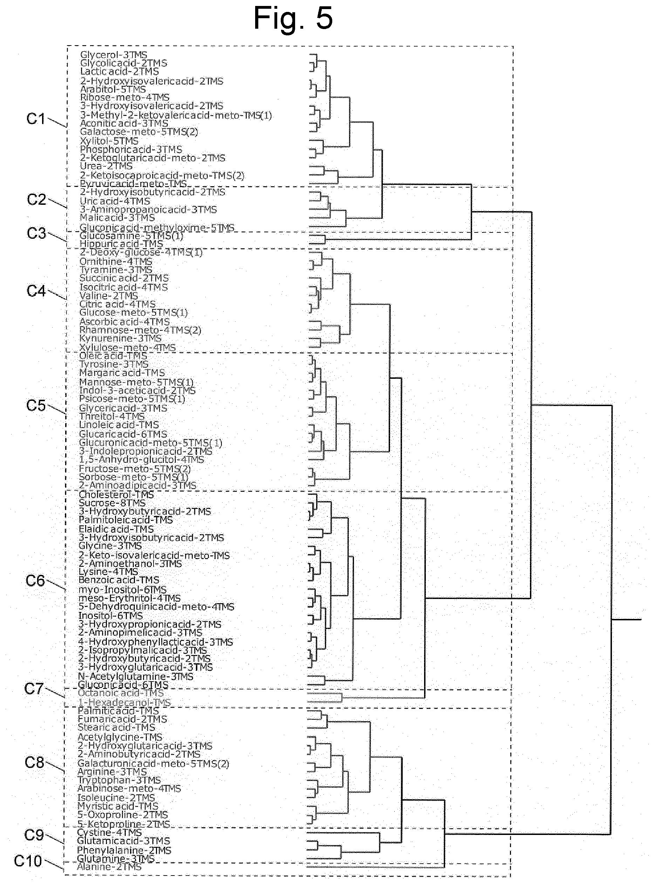

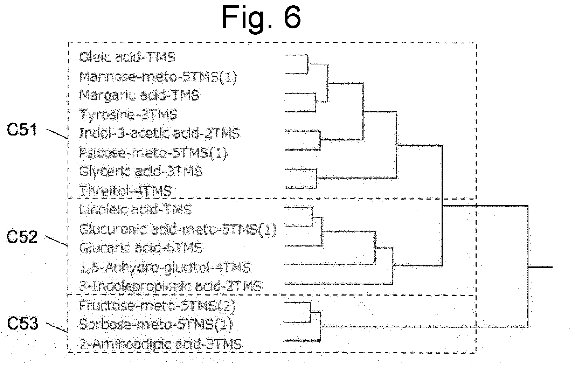

A similar measurement was also performed with the changing number of times of use of the column 12. Based on the rate of change in signal intensity, the grouping of the compounds was performed by a cluster analysis. The results were as shown in Figs. 5 and 6. Fig. 5 shows the result of a primary analysis, where C1 through C 10 represent primary clusters. Fig. 6 shows the result of a secondary analysis in Cluster C5 in Fig. 5, where C51 through C53 represent secondary clusters. Additionally, Table 2 shows an overview of the rate of change in signal intensity with the changing number of times of use of the column 12 in Clusters C2-C4, C53, C9 and C10.

**Table 2**

| | Cluster | Number of Components | Rate of Change | | |
|---|---|---|---|---|---|
| | | | 40 times | 160 times | 320 times |
| Rate of Change Constant | C2 | 5 | 0.84 | 0.95 | 0.91 |
| | C3 | 2 | 0.70 | 0.72 | 0.75 |
| | C53 | 4 | 0.96 | 0.94 | 1.00 |
| Rate of Change Increased | C4 | 12 | 0.89 | 0.94 | 1.10 |
| | C9 | 4 | 1.04 | 1.00 | 1.19 |
| | C10 | 1 | 1.12 | 1.25 | 1.33 |

The results of the analysis show that the signal intensities in Clusters C2, C3 and C53 did not significantly change with the increasing number of times of use of the column 12. On the other hand, the signal intensities in Clusters C4, C9 and C10 had the tendency to increase with the increasing number of times of use.

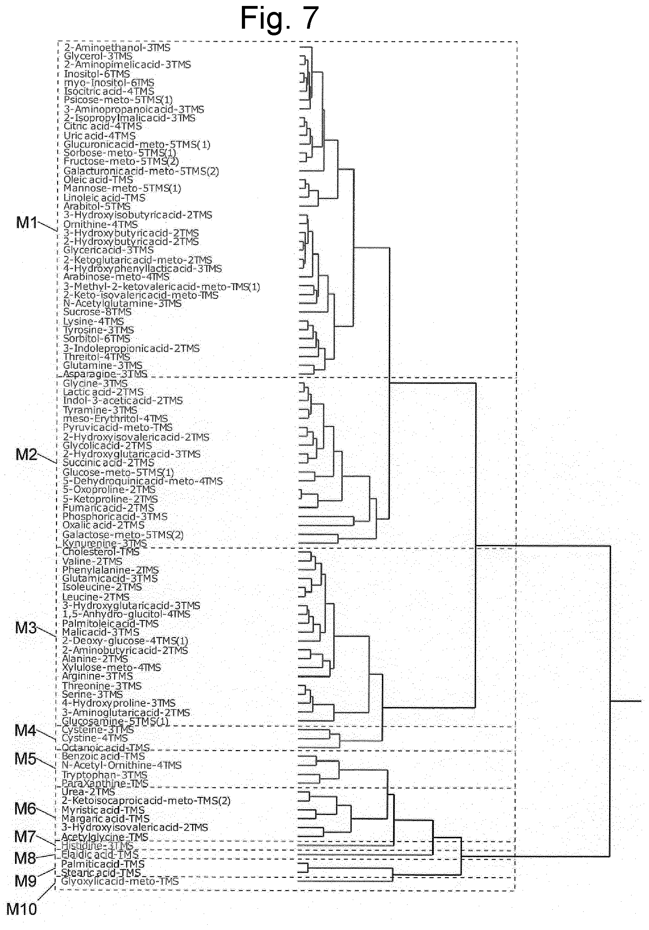

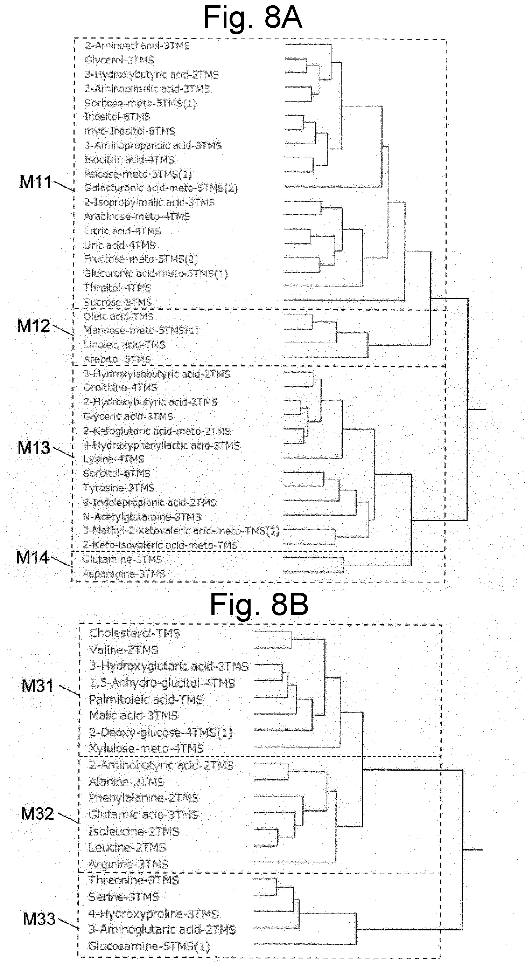

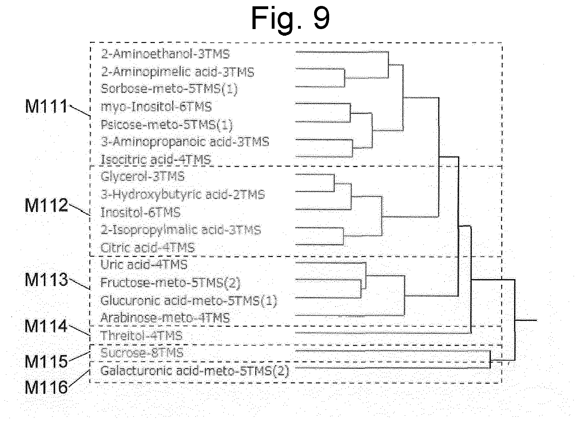

A similar measurement was also performed with the changing number of times of use of the ionization chamber 21. Based on the rate of change in signal intensity, the grouping of the compounds was performed by a cluster analysis. The results were as shown in Figs. 7, 8A, 8B and 9. Fig. 7 shows the result of a primary analysis, where M1 through M10 represent primary clusters. Fig. 8A shows the result of a secondary analysis in Cluster M1 in Fig. 7, where M11 through M14 represent secondary clusters. Fig. 8B shows the result of a secondary analysis in Cluster M3 in Fig. 7, where M31 through M33 represent secondary clusters. Fig. 9 shows the result of a tertiary analysis in Cluster M11 in Fig. 8A, where Mill through M116 represent tertiary clusters. Additionally, Table 3 shows an overview of the rate of change in signal intensity with the changing number of times of use of the ionization chamber 21 in Clusters M111-M113, M32, M33 and M4.

**Table 3**

| | Cluster | Number of Components | Rate of Change | | | | | | | | |
|---|---|---|---|---|---|---|---|---|---|---|---|
| | | | 40 times | 320 times | 400 times | 600 times | 800 times | 1000 times | 1200 times | 1400 times | 1600 times |
| Rate of Change Constant | M111 | 7 | 1.07 | 1.14 | 1.15 | 1.08 | 1.10 | 1.08 | 1.05 | 1.01 | 1.05 |
| | M112 | 5 | 1.09 | 1.17 | 1.18 | 1.07 | 1.12 | 1.09 | 1.05 | 1.04 | 1.06 |
| | M113 | 4 | 1.12 | 1.17 | 1.15 | 1.12 | 1.16 | 1.09 | 1.03 | 1.01 | 1.13 |
| Rate of Change Decreased | M32 | 7 | 1.07 | 1.19 | 1.10 | 0.99 | 1.03 | 1.05 | 1.03 | 0.86 | 0.83 |
| | M33 | 5 | 0.99 | 1.08 | 0.95 | 0.83 | 0.87 | 0.91 | 0.94 | 0.78 | 0.76 |
| | M4 | 3 | 1.29 | 1.15 | 0.90 | 0.86 | 0.83 | 0.95 | 0.80 | 0.75 | 0.72 |

The results of the analysis show that the signal intensities in Clusters M111-M113 did not significantly change with the increasing number of times of use of the ionization chamber 21. On the other hand, the signal intensities in Clusters M32, M33 and M4 had the tendency to decrease with the increasing number of times of use.

From the analysis results described thus far, it is possible to consider that the degree of consumption of a consumable part can be assessed based on the signal-intensity ratio of the peaks originating from two indicator substances which show different tendencies in the change of the signal intensity with the changing number of times of use of the consumable part.

Accordingly, from Figs. 3, 4A and 4B, the sample for assessment to be used for the assessment of the glass insert 101 should preferably contain, as the indicator substances, at least one compound selected from a first group in which an increasing tendency of the detection intensity has been recognized, and at least one compound selected from a second group in which a decreasing tendency of the detection intensity has been recognized, where the first group consists of: (Cluster G13) Lactic acid-2TMS, 2-Hydroxybutyric acid-2TMS, 3-Hydroxybutyric acid-2TMS, 2-Hydroxyisovaleric acid-2TMS, 3-Hydroxyisobutyric acid-2TMS, Pyruvic acid-meto-TMS, Elaidic acid-TMS, Uric acid-4TMS, 1,5-Anhydro-glucitol-4TMS, Benzoic acid-TMS and 2-Hydroxyisobutyric acid-2TMS; (Cluster G14) Margaric acid-TMS; (Cluster G15) Glycerol-3TMS, Hippuric acid-TMS, 3-Hydroxyisovaleric acid-2TMS and Myristic acid-TMS; and (Cluster G6) Urea-2TMS, Octanoic acid-TMS, Stearic acid-TMS and Palmitic acid-TMS, while the second group consists of: (Cluster G22) Glutamine-3TMS, Histidine-3TMS, Threitol-4TMS, Glutamic acid-3TMS, Phenylalanine-2TMS, 3-Aminoglutaric acid-2TMS and Asparagine-3TMS; (Cluster G23) Cysteine-3TMS, Methionine-2TMS and 4-Hydroxyproline-3TMS; and (Cluster G24) N-Acetyl-Omithine-4TMS and Alanine-2TMS. It should be noted that TMS and meto indicate that the compound concerned is trimethylsilylated or methoximated, respectively. The same applies hereinafter.

From Figs. 5 and 6, the sample for assessment to be used for the assessment of the column 12 should preferably contain, as the indicator substances, at least one compound selected from a third group in which it has been recognized that no significant change in detection intensity occurs, and at least one compound selected from a fourth group in which an increasing tendency of the detection intensity has been recognized, where the third group consists of: (Cluster 2) 2-Hydroxyisobutyric acid-2TMS, Uric acid-4TMS, 3-Aminopropanoic acid-3TMS, Malic acid-3TMS and Gluconic acid-methyloxime-5TMS; (Cluster C3) Glucosamine-5TMS and Hippuric acid-TMS; and (Cluster C53) Fructose-meto-5TMS, Sorbose-meto-5TMS and 2-Aminoadipic acid-3TMS, while the fourth group consists of: (Cluster C4) 2-Deoxy-glucose-4TMS, Omithine-4TMS, Tyramine-3TMS, Succinic acid-2TMS, Isocitric acid-4TMS, Valine-2TMS, Citric acid-4TMS, Glucose-meto-5TMS, Ascorbic acid-4TMS, Rhamnose-meto-4TMS, Kynurenine-3TMS and Xylulose-meto-4TMS; (Cluster C9) Cystine-4TMS, Glutamic acid-3TMS, Phenylalanine-2TMS and Glutamine-3TMS; and (Cluster C10) Alanine-2TMS.

From Figs. 7, 8A, 8B and 9, the sample for assessment to be used for the assessment of the ionization chamber 21 should preferably contain, as the indicator substances, at least one compound selected from a fifth group in which it has been recognized that no significant change in detection intensity occurs, and at least one compound selected from a sixth group in which a decreasing tendency of the detection intensity has been recognized, where the fifth group consists of: (Cluster Mill) 2-Aminoethanol-3TMS, 2-Aminopimelic acid-3TMS, Sorbose-meto-5TMS, myo-Inositol-6TMS, Psicose-meto-5TMS, 3-Aminopropanoic acid-3TMS and Isocitric acid-4TMS; (Cluster M112) Glycerol-3TMS, 3-Hydroxybutyric acid-2TMS, Inositol-6TMS, 2-Isopropylmalic acid-3TMS and Citric acid-4TMS; and (Cluster M113) Uric acid-4TMS, Fructose-meto-5TMS, Glucuronic acid-meto-5TMS and Arabinose-meto-4TMS, while the sixth group consists of: (Cluster M32) 2-Aminobutyric acid-2TMS, Alanine-2TMS, Phenylalanine-2TMS, Glutamic acid-3TMS, Isoleucine-2TMS, Leucine-2TMS and Arginine-3TMS; (Cluster M33) Threonine-3TMS, Serine-3TMS, 4-Hydroxyproline-3TM, 3-Aminoglutaric acid-2TMS and Glucosamine-5TMS(1); and (Cluster M4) Cysteine-3TMS, Cystine-4TMS and Octanoic acid-TMS.

Indicator substances for the septum 102 and the filament 211 can also be selected in a similar manner to the previously described method. A single sample for assessment may contain all of the indicator substances for the assessment of the glass insert 101, indicator substances for the assessment of septum 102, indicator substances for the assessment of the column 12, indicator substances for the assessment of the ionization chamber 21, and indicator substances for the assessment of the filament 211. It may also contain indicator substances for any combination of the consumable parts.

By the method for assessing the degree of consumption of a consumable part according to the present embodiment, the state of the degradation or contamination of a consumable part can be appropriately assessed. In the case where the sample for assessment contains indicator substances for the assessment of a plurality of consumable parts, the degrees of consumption of a plurality of consumable parts can be assessed by a single measurement. For example, when a decrease in the measurement sensitivity of a gas chromatograph or mass analyzer has been recognized, a mass spectrometric analysis can be performed for a sample for assessment which contains indicator substances for the assessment of a plurality of consumable parts. This allows for a collective assessment for determining which consumable part has the highest degree of consumption, so that the cause of the decrease in sensitivity can be easily identified.

### (Modified Examples)

The present invention is not limited to the previously described embodiment; it can be appropriately changed or modified.

For example, in the previous embodiment, a sample for assessment containing two indicator substances having different tendencies in the change of the signal intensity due to the use of a consumable part was subjected to the measurement, and the degree of consumption of the consumable part was assessed based on the ratio of the area values of the peaks corresponding those indicator substances. It is also possible to assess the degree of consumption by performing a mass spectrometric analysis of a sample for assessment containing one indicator substance for which a significant change in signal intensity has been previously recognized. Specifically, for an indicator substance for which a significant change in signal intensity due to the use of a consumable part has been previously recognized, a peak is detected from a created mass chromatogram, and the area value of this peak is compared with a previously set reference area value to assess the degree of consumption.

The indicator substances may be substances labelled with a stable isotope (e.g., deuterium or carbon 13). The use of this type of indicator substance makes it possible to perform a measurement with the indicator substance mixed in a normal measurement sample and yet distinguish the indicator substance originally contained in the measurement sample from the labelled indicator substance by mass spectrometry.

### [Modes]

It is evident to a person skilled in the art that the previously described illustrative embodiments are specific examples of the following modes of the present invention.

(Clause 1) A method for assessing the degree of consumption of a consumable part of a gas chromatograph according to one mode of the present invention includes:
an analyzing process in which a sample for assessment containing an indicator substance is passed through a gas chromatograph including a consumable part which comes in contact with a sample, and a mass spectrometric analysis of the sample for assessment exiting from the gas chromatograph is performed with a mass analyzer;
a signal-intensity acquisition process in which a signal intensity of the indicator substance is acquired from a result of the mass spectrometric analysis in the analyzing process; and
an assessment process in which the degree of consumption of the consumable part is assessed by comparing the signal intensity acquired in the signal-intensity acquisition process with a preset reference signal intensity.

(Clause 2) In the method for assessing the degree of consumption of a consumable part of a gas chromatograph according to Clause 1, the consumable part may be a septum, a glass insert or a column.

By the method for assessing the degree of consumption of a consumable part of a gas chromatograph according to Clause 1 or 2, the degree of consumption of a consumable part which comes in contact with a sample in a gas chromatograph can be appropriately assessed.

(Clause 3) In the method for assessing the degree of consumption of a consumable part of a gas chromatograph according to Clause 1 or 2:
the sample for assessment may contain at least two kinds of the indicator substances;
the signal-intensity acquisition process may include acquiring signal intensities of the two kinds of the indicator substances; and
the assessment process may include assessing the degree of consumption of the consumable part by comparing the ratio of the signal intensities of the two kinds of the indicator substances acquired in the signal-intensity acquisition process with a preset reference signal-intensity ratio.

(Clause 4) In the method for assessing the degree of consumption of a consumable part of a gas chromatograph according to Clause 3:
the consumable part may be a glass insert; and
the signal-intensity acquisition process may include acquiring a signal intensity of one indicator substance selected from a first group and a signal intensity of one indicator substance selected from a second group, where the first group consists of Lactic acid-2TMS, Benzoic acid-TMS, 3-Hydroxybutyric acid-2TMS, Pyruvic acid-meto-TMS, 2-Hydroxybutyric acid-2TMS, 2-Hydroxyisovaleric acid-2TMS, 3-Hydroxyisobutyric acid-2TMS, Elaidic acid-TMS, 2-Hydroxyisobutyric acid-2TMS, Uric acid-4TMS, 1,5-Anhydro-glucitol-4TMS, Margaric acid-TMS, Glycerol-3TMS, Hippuric acid-TMS, 3-Hydroxyisovaleric acid-2TMS, Myristic acid-TMS, Urea-2TMS, Stearic acid-TMS, Palmitic acid-TMS, and Octanoic acid-TMS, while the second group consists of Glutamine-3TMS, Glutamic acid-3TMS, Phenylalanine-2TMS, Histidine-3TMS, Asparagine-3TMS, Threitol-4TMS, 3-Aminoglutaric acid-2TMS, N-Acetyl-Omithine-4TMS, Cysteine-3TMS, Alanine-2TMS, 4-Hydroxyproline-3TMS, and Methionine-2TMS.

(Clause 5) In the method for assessing the degree of consumption of a consumable part of a gas chromatograph according to Clause 3:
the consumable part may be a column; and
the signal-intensity acquisition process may include acquiring a signal intensity of one indicator substance selected from a third group and a signal intensity of one indicator substance selected from a fourth group, where the third group consists of 2-Hydroxyisobutyric acid-2TMS, Malic acid-3TMS, 3-Aminopropanoic acid-3TMS, Gluconic acid-methyloxime-5TMS, Uric acid-4TMS, Glucosamine-5TMS, Hippuric acid-TMS, Fructose-meto-5TMS, Sorbose-meto-5TMS, and 2-Aminoadipic acid-3TMS, while the fourth group consists of 2-Deoxy-glucose-4TMS, Succinic acid-2TMS, Isocitric acid-4TMS, Omithine-4TMS, Tyramine-3TMS, Ascorbic acid-4TMS, Citric acid-4TMS, Glucose-meto-5TMS, Kynurenine-3TMS, Rhamnose-meto-4TMS, Xylulose-meto-4TMS, Valine-2TMS, Cystine-4TMS, Glutamic acid-3TMS, Phenylalanine-2TMS, Glutamine-3TMS, and Alanine-2TMS.

In the method for assessing the degree of consumption of a consumable part of a gas chromatograph according to one of Clauses 3-5, since the degree of consumption is assessed based on the ratio of the signal intensities of two kinds of indicator substances, the change in signal intensity is more noticeable, so that the degree of consumption of the consumable part can be more appropriately assessed.

(Clause 6) In the method for assessing the degree of consumption of a consumable part of a gas chromatograph according to one of Clauses 1-5, the indicator substances may be substances labelled with a stable isotope.

By the method for assessing the degree of consumption of a consumable part of a gas chromatograph according to Clause 6, the degree of consumption of a consumable part can be appropriately assessed even in the case of performing a measurement with the indicator substance mixed in a normal measurement sample.

(Clause 7) A sample for assessing the degree of consumption of a consumable part of a gas chromatograph according to one mode of the present invention is a sample for assessment to be used in the method for assessing the degree of consumption of a consumable part of a gas chromatograph according to Clause 4, wherein the sample contains at least one indicator substance selected from the first group and at least one indicator substance selected from the second group.

(Clause 8) A sample for assessing the degree of consumption of a consumable part of a gas chromatograph according to one mode of the present invention is a sample for assessment to be used in the method for assessing the degree of consumption of a consumable part of a gas chromatograph according to Clause 5, wherein the sample contains at least one indicator substance selected from the third group and at least one indicator substance selected from the fourth group.

With the sample for assessing the degree of consumption of a consumable part of a gas chromatograph according to Clause 7 or 8, the degree of consumption of a consumable part which comes in contact with a sample in a gas chromatograph can be appropriately assessed.

(Clause 9) A method for assessing the degree of consumption of a consumable part of a mass analyzer according to one mode of the present invention includes:
an analyzing process in which a mass spectrometric analysis of a sample for assessment containing an indicator substance is performed by using a mass analyzer including a consumable part which comes in contact with a sample;
a signal-intensity acquisition process in which a signal intensity of the indicator substance is acquired from a result of the mass spectrometric analysis in the analyzing process; and
an assessment process in which the degree of consumption of the consumable part is assessed by comparing the signal intensity acquired in the signal-intensity acquisition process with a preset reference signal intensity.

(Clause 10) In the method for assessing the degree of consumption of a consumable part of a mass analyzer according to Clause 9, the consumable part may be an ionization chamber or a filament.

By the method for assessing the degree of consumption of a consumable part of a mass analyzer according to Clause 9 or 10, the degree of consumption of a consumable part which comes in contact with a sample in a mass analyzer can be appropriately assessed.

(Clause 11) In the method for assessing the degree of consumption of a consumable part of a mass analyzer according to Clause 9 or 10:
the sample for assessment may contain at least two kinds of the indicator substances;
the signal-intensity acquisition process may include acquiring signal intensities of the two kinds of the indicator substances; and
the assessment process may include assessing the degree of consumption of the consumable part by comparing the ratio of the signal intensities of the two kinds of the indicator substances acquired in the signal-intensity acquisition process with a preset reference signal-intensity ratio.

(Clause 12) In the method for assessing the degree of consumption of a consumable part of a mass analyzer according to Clause 11,
the consumable part may be an ionization chamber; and
the signal-intensity acquisition process may include acquiring a signal intensity of one indicator substance selected from a fifth group and a signal intensity of one indicator substance selected from a sixth group, where the fifth group consists of 2-Aminoethanol-3TMS, myo-Inositol-6TMS, 2-Aminopimelic acid-3TMS, Sorbose-meto-5TMS, 3-Aminopropanoic acid-3TMS, Isocitric acid-4TMS, Psicose-meto-5TMS, Glycerol-3TMS, 2-Isopropylmalic acid-3TMS, 3-Hydroxybutyric acid-2TMS, Inositol-6TMS, Citric acid-4TMS, Uric acid-4TMS, Fructose-meto-5TMS, Glucuronic acid-meto-5TMS, and Arabinose-meto-4TMS, while the sixth group consists of 2-Aminobutyric acid-2TMS, Phenylalanine-2TMS, Glutamic acid-3TMS, Alanine-2TMS, Isoleucine-2TMS, Leucine-2TMS, Arginine-3TMS, Threonine-3TMS, Glucosamine-5TMS, Serine-3TMS, 3-Aminoglutaric acid-2TMS, 4-Hydroxyproline-3TM, Cysteine-3TMS, Octanoic acid-TMS, and Cystine-4TMS.

By the method for assessing the degree of consumption of a consumable part of a mass analyzer according to Clause 11 or 12, since the degree of consumption is assessed based on the ratio of the signal intensities of two kinds of indicator substances, the change in signal intensity is more noticeable, so that the degree of consumption of the consumable part can be more appropriately assessed.

(Clause 13) In the method for assessing the degree of consumption of a consumable part of a mass analyzer according to one of Clauses 9-12, the indicator substances may be substances labelled with a stable isotope.

By the method for assessing the degree of consumption of a consumable part of a mass analyzer according to Clause 13, the degree of consumption of a consumable part can be appropriately assessed even in the case of performing a measurement with the indicator substance mixed in a normal measurement sample.

(Clause 14) A sample for assessing the degree of consumption of a consumable part of a mass analyzer according to one mode of the present invention is a sample for assessment to be used in the method for assessing the degree of consumption of a consumable part of a mass analyzer according to Clause 12, wherein the sample contains at least one indicator substance selected from the fifth group and at least one indicator substance selected from the sixth group.

With the sample for assessing the degree of consumption of a consumable part of a mass analyzer according to Clause 14, the degree of consumption of a consumable part which comes in contact with a sample in a mass analyzer can be appropriately assessed.

### REFERENCE SIGNS LIST

- 1: Gas Chromatograph
- 10: Sample Vaporization Chamber
- 101: Glass Insert
- 102: Septum
- 11: Micro Syringe
- 12: Column
- 13: Column Oven
- 2: Mass Analyzer
- 20: Analysis Chamber
- 21: Ionization Chamber
- 211: Filament
- 22: Ion Lens
- 23: Front Quadrupole Mass Filter
- 24: Multipole Ion Guide
- 25: Collision Cell
- 26: Rear Quadrupole Mass Filter
- 27: Detector
- 3: Data Processing Unit
- 30: Data Storage Section
- 31: Chromatogram Creator
- 32: Peak Detector
- 33: Peak-Area Ratio Calculator
- 34: Assessment Processor
- 4: Storage Unit

## Claims

1. A method for assessing a degree of consumption of a consumable part of a gas chromatograph, comprising:
an analyzing process in which a sample for assessment containing an indicator substance is passed through a gas chromatograph including a consumable part which comes in contact with a sample, and a mass spectrometric analysis of the sample for assessment exiting from the gas chromatograph is performed with a mass analyzer;
a signal-intensity acquisition process in which a signal intensity of the indicator substance is acquired from a result of the mass spectrometric analysis in the analyzing process; and
an assessment process in which the degree of consumption of the consumable part is assessed by comparing the signal intensity acquired in the signal-intensity acquisition process with a preset reference signal intensity.

2. The method for assessing a degree of consumption of a consumable part of a gas chromatograph according to claim 1, wherein the consumable part is a septum, a glass insert or a column.

3. The method for assessing a degree of consumption of a consumable part of a gas chromatograph according to claim 1 or 2, wherein:
the sample for assessment contains at least two kinds of the indicator substances;
the signal-intensity acquisition process includes acquiring signal intensities of the two kinds of the indicator substances; and
the assessment process includes assessing the degree of consumption of the consumable part by comparing a ratio of the signal intensities of the two kinds of the indicator substances acquired in the signal-intensity acquisition process with a preset reference signal-intensity ratio.

4. The method for assessing a degree of consumption of a consumable part of a gas chromatograph according to claim 3, wherein:
the consumable part is a glass insert; and
the signal-intensity acquisition process includes acquiring a signal intensity of one indicator substance selected from a first group and a signal intensity of one indicator substance selected from a second group, where the first group consists of Lactic acid-2TMS, Benzoic acid-TMS, 3-Hydroxybutyric acid-2TMS, Pyruvic acid-meto-TMS, 2-Hydroxybutyric acid-2TMS, 2-Hydroxyisovaleric acid-2TMS, 3-Hydroxyisobutyric acid-2TMS, Elaidic acid-TMS, 2-Hydroxyisobutyric acid-2TMS, Uric acid-4TMS, 1,5-Anhydro-glucitol-4TMS, Margaric acid-TMS, Glycerol-3TMS, Hippuric acid-TMS, 3-Hydroxyisovaleric acid-2TMS, Myristic acid-TMS, Urea-2TMS, Stearic acid-TMS, Palmitic acid-TMS, and Octanoic acid-TMS, while the second group consists of Glutamine-3TMS, Glutamic acid-3TMS, Phenylalanine-2TMS, Histidine-3TMS, Asparagine-3TMS, Threitol-4TMS, 3-Aminoglutaric acid-2TMS, N-Acetyl-Omithine-4TMS, Cysteine-3TMS, Alanine-2TMS, 4-Hydroxyproline-3TMS, and Methionine-2TMS.

5. The method for assessing a degree of consumption of a consumable part of a gas chromatograph according to claim 3, wherein:
the consumable part is a column; and
the signal-intensity acquisition process includes acquiring a signal intensity of one indicator substance selected from a third group and a signal intensity of one indicator substance selected from a fourth group, where the third group consists of 2-Hydroxyisobutyric acid-2TMS, Malic acid-3TMS, 3-Aminopropanoic acid-3TMS, Gluconic acid-methyloxime-5TMS, Uric acid-4TMS, Glucosamine-5TMS, Hippuric acid-TMS, Fructose-meto-5TMS, Sorbose-meto-5TMS, and 2-Aminoadipic acid-3TMS, while the fourth group consists of 2-Deoxy-glucose-4TMS, Succinic acid-2TMS, Isocitric acid-4TMS, Omithine-4TMS, Tyramine-3TMS, Ascorbic acid-4TMS, Citric acid-4TMS, Glucose-meto-5TMS, Kynurenine-3TMS, Rhamnose-meto-4TMS, Xylulose-meto-4TMS, Valine-2TMS, Cystine-4TMS, Glutamic acid-3TMS, Phenylalanine-2TMS, Glutamine-3TMS, and Alanine-2TMS.

6. The method for assessing a degree of consumption of a consumable part of a gas chromatograph according to one of claims 1-5, wherein the indicator substances are substances labelled with a stable isotope.

7. A sample for assessing a degree of consumption of a consumable part of a gas chromatograph, wherein the sample is a sample for assessment to be used in the method for assessing a degree of consumption of a consumable part of a gas chromatograph according to claim 4 and contains at least one indicator substance selected from the first group and at least one indicator substance selected from the second group.

8. A sample for assessing a degree of consumption of a consumable part of a gas chromatograph, wherein the sample is a sample for assessment to be used in the method for assessing a degree of consumption of a consumable part of a gas chromatograph according to claim 5 and contains at least one indicator substance selected from the third group and at least one indicator substance selected from the fourth group.

9. A method for assessing a degree of consumption of a consumable part of a mass analyzer, comprising:
an analyzing process in which a mass spectrometric analysis of a sample for assessment containing an indicator substance is performed by using a mass analyzer including a consumable part which comes in contact with a sample;
a signal-intensity acquisition process in which a signal intensity of the indicator substance is acquired from a result of the mass spectrometric analysis in the analyzing process; and
an assessment process in which the degree of consumption of the consumable part is assessed by comparing the signal intensity acquired in the signal-intensity acquisition process with a preset reference signal intensity.

10. The method for assessing a degree of consumption of a consumable part of a mass analyzer according to claim 9, wherein the consumable part is an ionization chamber or a filament.

11. The method for assessing a degree of consumption of a consumable part of a mass analyzer according to claim 9 or 10, wherein:
the sample for assessment contains at least two kinds of the indicator substances;
the signal-intensity acquisition process includes acquiring signal intensities of the two kinds of the indicator substances; and
the assessment process includes assessing the degree of consumption of the consumable part by comparing a ratio of the signal intensities of the two kinds of the indicator substances acquired in the signal-intensity acquisition process with a preset reference signal-intensity ratio.

12. The method for assessing a degree of consumption of a consumable part of a mass analyzer according to claim 11, wherein:
the consumable part is an ionization chamber; and
the signal-intensity acquisition process includes acquiring a signal intensity of one indicator substance selected from a fifth group and a signal intensity of one indicator substance selected from a sixth group, where the fifth group consists of 2-Aminoethanol-3TMS, myo-Inositol-6TMS, 2-Aminopimelic acid-3TMS, Sorbose-meto-5TMS, 3-Aminopropanoic acid-3TMS, Isocitric acid-4TMS, Psicose-meto-5TMS, Glycerol-3TMS, 2-Isopropylmalic acid-3TMS, 3-Hydroxybutyric acid-2TMS, Inositol-6TMS, Citric acid-4TMS, Uric acid-4TMS, Fructose-meto-5TMS, Glucuronic acid-meto-5TMS, and Arabinose-meto-4TMS, while the sixth group consists of 2-Aminobutyric acid-2TMS, Phenylalanine-2TMS, Glutamic acid-3TMS, Alanine-2TMS, Isoleucine-2TMS, Leucine-2TMS, Arginine-3TMS, Threonine-3TMS, Glucosamine-5TMS, Serine-3TMS, 3-Aminoglutaric acid-2TMS, 4-Hydroxyproline-3TM, Cysteine-3TMS, Octanoic acid-TMS, and Cystine-4TMS.

13. The method for assessing a degree of consumption of a consumable part of a mass analyzer according to one of claims 9-12, wherein the indicator substances are substances labelled with a stable isotope.

14. A sample for assessing a degree of consumption of a consumable part of a mass analyzer, wherein the sample is a sample for assessment to be used in the method for assessing a degree of consumption of a consumable part of a mass analyzer according to claim 12 and contains at least one indicator substance selected from the fifth group and at least one indicator substance selected from the sixth group.
